# FASCICULE DE BREVET EUROPEEN

(11) **EP 2 627 544 B1**
(45) Date de publication et mention de la délivrance du brevet: **18.05.2022**
(21) Numéro de dépôt: 11771238.0
(22) Date de dépôt: 21.09.2011
(51) Int. Cl.: B60W 10/02, B60W 10/06, B60T 7/12, B60W 30/18, B60W 30/188

(54) **PROCEDE DE COMMANDE D'UN DEMARRAGE D'UN VEHICULE EQUIPE D'UN SYSTEME DE MISE EN VEILLE D'UN MOTEUR**
VERFAHREN ZUR STEUERUNG DES ANLASSENS EINES FAHRZEUGS MIT EINEM ENGINE START-STOP-SYSTEM
METHOD FOR CONTROLLING THE START-UP OF A VEHICLE COMPRISING AN ENGINE START-STOP SYSTEM

(30) Priorité: 11.10.2010 FR 1058249
(43) Date de publication de la demande: 21.08.2013
(73) Titulaire: PSA Automobiles SA, 78300 Poissy (FR)
(72) Inventeur: GRISI, Fabrice, F-92250 La Garenne Colombes (FR)
(74) Mandataire: Bourguignon, Eric Pascal Jean
(86) Numéro de dépôt international: PCT/FR2011/052169
(87) Numéro de publication internationale: WO 2012/049385

(56) Documents cités:
- EP-A2- 1 348 895
- DE-A1- 19 943 788
- US-A1- 2003 073 540
- US-A1- 2005 082 098
- US-A1- 2006 166 789
- US-A1- 2010 174 465

## Description

L'invention concerne un procédé de commande d'un démarrage d'un véhicule équipé d'un système de mise en veille d'un moteur.

Des procédés de de commande d'un démarrage d'un véhicule équipé d'un système de mise en veille d'un moteur sont connus par exemple des documents US2010174465A1, US2006166789A1, US2005082098A1, US2003073540A1.

Le système de mise en veille du moteur est plus connu sous les termes de « Start and Stop ». Par la suite, seule l'expression « start and stop » est utilisée.

L'invention s'applique en particulier aux véhicules hybrides. Par « véhicule hybride » on désigne un véhicule dont le moteur (groupe motopropulseur) comporte un moteur thermique et une machine électrique chacun apte à fournir un couple sur un arbre de sortie d'un vilebrequin de manière à entraîner en rotation des roues motrices du véhicule.

Parmi ces véhicules hybrides, les véhicules intégrant la technologie « stop and start » permettent d'optimiser la consommation d'un véhicule en stoppant le fonctionnement du moteur thermique lorsque le véhicule est à l'arrêt et en redémarrant le moteur thermique lorsque, par exemple, le conducteur du véhicule relâche la pression sur la pédale de frein. Le redémarrage du véhicule peut prendre la forme d'un démarrage initial, ou d'un démarrage assisté.

Par « démarrage initial » on désigne un démarrage du moteur thermique durant lequel la rotation de l'arbre de sortie du vilebrequin est initiée par un démarreur électrique. Par « démarrage assisté » on désigne un démarrage du moteur thermique durant lequel la rotation de l'arbre de sortie du vilebrequin est initiée par un alterno-démarreur.

Le démarreur et l'alterno-démarreur sont des machines électriques utilisant une source électrique telle qu'une batterie. Le fonctionnement d'un démarreur ou d'un alterno-démarreur est connu en soi. Typiquement, le démarreur ou l'alterno-démarreur entraîne en rotation l'arbre de sortie du vilebrequin jusqu'à atteindre un régime moteur prédéterminé. Par « régime moteur » on désigne une vitesse de rotation de l'arbre de sortie de vilebrequin, par exemple exprimée en tours par minute. Une fois ce régime moteur établi, un calculateur commande une injection maximale de carburant dans des cylindres de combustion du moteur thermique puis régule l'injection pour que le régime moteur se stabilise. Dès lors, le démarreur ou l'alterno-démarreur cesse d'entraîner en rotation l'arbre de sortie du vilebrequin et le moteur thermique fonctionne de manière autonome.

Les véhicules intégrant la technologie « stop and start » sont particulièrement adaptés à la conduite en milieu urbain où le nombre d'arrêts et de redémarrages est important.

Dans la suite de cette description on utilise le raccourci « véhicule stop and start » pour désigner un véhicule intégrant la technologie « stop and start ».

Des véhicules automobiles connus du déposant comportent une boîte de vitesse mécanique pilotée (BVMP). Par « boîte de vitesse mécanique pilotée » on désigne une boîte de vitesse dans laquelle le passage des rapports est assisté électroniquement. Un tel type de boîte de vitesse autorise un passage automatique ou séquentiel des rapports. Typiquement, lors d'un passage automatique, le passage des rapports est géré par un calculateur électronique. Lors d'un passage séquentiel le passage des rapports est géré par un conducteur.

Ces BVMP présentent l'avantage de n'actionner le passage d'un rapport que lorsque des conditions optimales de régime et de couple moteur sont réunies. Ainsi, les cas extrêmes où le moteur thermique cale ou est en sur-régime sont limités.

Dans cette description, on désigne par « couple moteur » le couple fourni par le moteur thermique à l'arbre de sortie de vilebrequin.

Lors d'un démarrage d'un véhicule équipé d'une BVMP, un embrayage accouple en rotation l'arbre de sortie de vilebrequin avec un arbre d'entraînement des roues motrices. En conséquence, l'arbre d'entraînement prélève un couple sur l'arbre de sortie de vilebrequin pour entraîner le déplacement du véhicule. Si le couple prélevé par l'arbre d'entraînement est supérieur au couple moteur, le moteur thermique cale inexorablement.

Aussi, un inconvénient inhérent de ces boîtes de vitesse pilotées est que lors d'un démarrage la commande de l'embrayage est délicate. Cet inconvénient est d'autant plus problématique dans le cas des véhicules stop and start pour lesquels le nombre de démarrage est conséquent.

De plus, il est nécessaire de démarrer le plus rapidement possible.

L'invention vise à résoudre ces inconvénients.

L'invention porte ainsi sur un procédé de commande d'un démarrage d'un véhicule équipé d'un système de mise en veille d'un moteur, ce procédé comportant :
- l'actionnement d'un démarrage du véhicule,
- l'indication d'un état moteur autonome en réponse à la présence simultanée d'une injection de carburant dans des chambres de combustion du moteur thermique et d'un régime du moteur thermique supérieur à un seuil S1 prédéfini, le seuil S1 étant égal à un régime moteur ne pouvant pas être atteint sans combustion dans les chambres de combustion lors d'un démarrage du véhicule,
et
- en réponse à l'indication de l'état moteur autonome, la commande de la fermeture d'un embrayage en fonction d'une consigne prédéfinie de régime moteur pour asservir le régime moteur sur cette consigne prédéfinie, l'embrayage permettant d'accoupler mécaniquement des roues motrices du véhicule à un arbre de sortie de vilebrequin du moteur,
- la temporisation de la mise en œuvre d'un dispositif d'assistance au démarrage en côte jusqu'à la fin d'une durée T1 écoulée depuis l'indication de l'état moteur autonome, la durée T1 étant prédéfinie de manière à ce qu'une fois la temporisation écoulée, si un système de freinage est relâché, le couple moteur est suffisamment important pour entraîner le déplacement du véhicule uniquement en marche avant sans mouvement de recul,
- l'émission d'un signal de couple disponible une fois la durée T1 écoulée, et
- la commande du dispositif d'assistance au démarrage en côte en réponse à l'émission de ce signal pour relâcher le système de freinage.

Dans le procédé présenté plus haut un démarrage rapide du véhicule stop and start est mis en œuvre en commandant l'embrayage dès que le moteur est autonome, c'est-à-dire dès que le moteur thermique a la capacité à fournir un couple à l'arbre d'entraînement des roues motrices. L'asservissement du régime moteur permet au moteur thermique de ne pas caler lors du démarrage.

Les modes de réalisation de ce procédé peuvent comporter une ou plusieurs des caractéristiques suivantes :
- tant que l'indication d'un état moteur autonome n'est pas présente, l'embrayage est commandé pour désaccoupler les roues motrices du véhicule à l'arbre de sortie de vilebrequin,

le procédé comporte également :
▪ le seuil S1 et/ou la durée T1 sont prédéfinis en fonction d'une température du moteur et/ou d'une pression atmosphérique mesurées,
▪ le procédé comporte également:
   - l'émission d'un signal de couple précis après qu'une deuxième durée T2 se soit écoulée depuis l'émission du signal de couple disponible, et
   - le calcul ou l'estimation du couple fourni par le moteur en réponse à l'émission de ce signal de couple précis.
▪ la deuxième durée T2 est prédéfinie en fonction d'une température du moteur et/ou d'une pression atmosphérique mesurées.

D'autres caractéristiques et avantages de l'invention ressortiront clairement de la description qui en est faite ci-après, à titre indicatif et nullement limitatif, en référence aux dessins annexés, dans lesquels :
- la figure 1 est une illustration schématique d'un véhicule hybride équipé d'un ensemble de commande d'un démarrage, et
- la figure 2 est un organigramme d'un procédé de commande d'un démarrage du véhicule de la figure 1.

Dans la suite de cette description, les caractéristiques et fonctions bien connues de l'homme du métier ne sont pas décrites en détail.

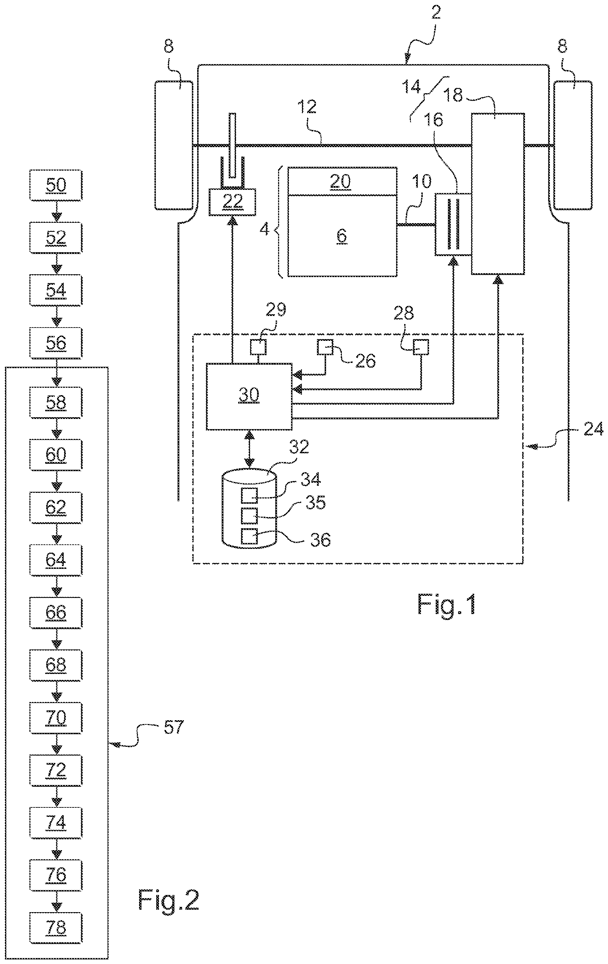

La figure 1 représente un véhicule hybride 2. Par exemple, le véhicule 2 est un véhicule automobile tel qu'une voiture. Ici, le véhicule 2 est un véhicule stop and start.

Le véhicule 2 comporte un groupe motopropulseur 4 comprenant un moteur thermique 6. Dans cet exemple, le moteur thermique 6 est un moteur de type Diesel.

Le moteur thermique 6 est apte à entraîner en rotation des roues motrices avant 8 du véhicule 2. A cet effet, le moteur thermique 6 comporte un arbre de sortie de vilebrequin 10 accouplé en rotation avec un arbre d'entrainement 12 des roues motrices 8 par le biais d'une chaîne de transmission 14.

La chaîne de transmission 14 comporte un embrayage 16 et une boîte de vitesse mécanique pilotée 18.

L'embrayage 16 permet d'accoupler, et en alternance, de désaccoupler l'arbre 10 de sortie de vilebrequin à l'arbre 12 d'entraînement des roues motrices 8. Dans l'exemple, l'embrayage 16 est commandé électroniquement. Aussi, ici le véhicule 2 ne comprend pas de pédale d'embrayage.

La boîte de vitesse pilotée 18 permet de réaliser l'adaptation de couple entre le couple moteur et le couple prélevé par l'arbre 12. A cet effet, la boîte 18 comprend un ensemble de pignons et/ou de crabots formant des réducteurs (ou rapports). Le passage d'un rapport est assisté électroniquement. Ici, le passage d'un rapport est séquentiel.

L'embrayage 16 et la boîte de vitesse mécanique pilotée 18 sont connus en soi. Aussi ils ne feront pas l'objet d'une description plus détaillée.

Le groupe motopropulseur 4 comprend également une machine électrique 20. Cette machine électrique 20 comprend un démarreur et un alterno-démarreur pour la mise en œuvre d'un démarrage initial et d'un démarrage assisté du véhicule 2. Afin de simplifier la figure 1 le démarreur et l'alterno-démarreur ne sont pas représentés sur cette figure.

Le véhicule 2 comprend également un dispositif 22 d'assistance au démarrage en côte (également connu sous le nom de dispositif « Hill assist »). Le dispositif 22 comprend un système de freinage permettant d'immobiliser le véhicule et un capteur d'inclinaison permettant de mesurer la déclivité de la chaussée.

Le fonctionnement du dispositif 22 est connu en soi. Typiquement, lors d'un démarrage en côte, lorsqu'un conducteur du véhicule 2 relâche une pédale de frein, le dispositif 22 maintient le véhicule 2 immobilisé (par le biais du système de freinage) pendant une durée t laissant au conducteur le temps de passer de la pédale de frein à une pédale d'accélérateur. La durée t est par exemple déterminée à partir d'une mesure de la déclivité de la chaussée.

Le véhicule 2 comporte également un dispositif 24 de commande d'un démarrage du véhicule 2.

Le dispositif 24 comprend un capteur 26 pour mesurer une température du moteur. Dans cette description, on désigne par « température du moteur » toute grandeur représentative de la température du moteur thermique 4. De telles grandeurs sont par exemple la température d'un liquide de refroidissement (température d'eau) ou encore la température d'huile moteur. Ici, le capteur 26 mesure la température d'huile moteur.

Le dispositif 24 comprend également un capteur 28 pour mesurer le régime moteur et un capteur 29 pour mesurer la pression atmosphérique.

Le dispositif 24 comporte enfin une unité de calcul 30 apte à :
- acquérir les mesures issues des capteurs 26, 28, et 29,
- traiter ces mesures, et
- commander le moteur thermique 4, l'embrayage 16, la boîte de vitesse18, et le dispositif 22 d'assistance au démarrage en côte en fonction d'un résultat de ce traitement pour démarrer le véhicule 2.

A cet effet, l'unité 30 est électriquement raccordée aux capteurs 26, 28, 29, à l'embrayage 16, à la boîte de vitesse 18, et au dispositif 22 d'assistance au démarrage en côte.

Avantageusement, l'unité 30, les capteurs 26, 28, le moteur thermique 4, l'embrayage 16, la boîte de vitesse mécanique pilotée 18, et le dispositif 22 d'assistance au démarrage en côte sont raccordés les uns aux autres par le biais d'un réseau de type CAN (Control Area Network) de manière à pouvoir partager des informations.

Dans cet exemple, l'unité de calcul 30 est réalisée à partir d'un calculateur électronique programmable apte à exécuter des instructions enregistrées sur un support d'enregistrement d'informations. A cet effet, l'unité 30 est ici raccordée à une mémoire 32 contenant des instructions pour l'exécution du procédé de la figure 2.

La mémoire 32 contient également des cartographies 34, 35, 36.

La cartographie 34 définit un seuil S1 de régime moteur dans des conditions de fonctionnement du véhicule 2 correspondant à une injection de carburant non nulle dans les chambres de combustion du moteur thermique 6. Le seuil S1 correspond à un régime moteur ne pouvant pas être atteint si il n'y a pas de combustion du carburant dans les chambres de combustion du moteur. A cet effet, le seuil S1 est choisi strictement supérieur au régime moteur maximum pouvant être atteint sans combustion dans les chambres de combustion lors d'un démarrage du véhicule 2. Autrement dit, le seuil S1 est supérieur au régime moteur maximum pouvant être atteint lorsque l'unique source d'entraînement en rotation de l'arbre de sortie de vilebrequin est la machine électrique 20. Ici, le seuil S1 est fonction de la température du moteur et de la pression atmosphérique.

Par la suite, on dit que le moteur thermique est dans un état « moteur autonome » lorsque :
- une injection de carburant est non nulle dans les chambres de combustion du moteur thermique 6, et
- le régime moteur est supérieur ou égal au seuil S1.

La cartographie 35 définit une durée de temporisation T1 depuis le passage du moteur thermique 6 dans l'état « moteur autonome ».

La durée T1 est prédéfinie de manière à ce qu'une fois la temporisation écoulée, si un système de freinage du véhicule 2 est relâché, le couple moteur est suffisamment important pour permettre le déplacement du véhicule 2 uniquement en marche avant sans mouvement de recul. Dans l'exemple, la durée T1 est fonction de la température du moteur et de la pression atmosphérique.

Ici, la durée T1 correspond à la durée minimum, depuis le passage du moteur thermique 6 dans l'état « moteur autonome » pour que les pistons du moteur thermique 6 passent par deux points morts hauts dans les cylindres. La durée T1 est de préférence déterminée de manière à ce que lors du démarrage du véhicule 2 le conducteur n'est pas un sentiment de retenu du système de freinage. Typiquement, cette durée est comprise entre 100ms et 150ms.

La cartographie 36 définit une durée de temporisation T2 depuis l'émission d'un signal de « couple disponible ». Ce signal est présenté plus loin en référence au procédé de la figure 2.

La durée T2 correspond à la durée de temporisation nécessaire pour que le moteur thermique 6 atteigne des conditions stabilisées (quantité de carburant injecté dans les chambres de combustion et régime moteur stables) permettant le calcul ou l'estimation précise du couple moteur. Typiquement, cette durée est comprise entre 100ms et 150ms. Le calcul ou l'estimation du couple est précise quand le couple calculé ou estimé est égal au couple réel à plus ou moins 5N/m près. Ici, la durée T2 est fonction de la température du moteur et de la pression atmosphérique.

Dans l'exemple, les cartographies 34, 35 et 36 sont des tables à deux entrées: la température du moteur et la pression atmosphérique.

Un procédé de commande du démarrage d'un véhicule stop and start va maintenant être décrit en référence à la figure 2.

Lors d'une étape 50 de mise au point, les cartographies 34, 36 sont construites et pré-enregistrées dans la mémoire 32.

Les cartographies 34, 35, 36 sont par exemple construites par simulation à l'aide d'un modèle du véhicule 2. Typiquement, lors de la mise au point la température du moteur et la pression atmosphérique sont modifiées pas à pas, indépendamment l'une de l'autre, dans des plages de valeurs prédéterminées. A chaque association d'une température du moteur et d'une pression atmosphérique, des démarrages du véhicule 2 sont simulés de manière à déterminer le plus petit seuil de régime S1, et les plus courtes durées de temporisation T1 et T2. Une fois le seuil S1, et les durées T1 et T2 obtenues, ceux-ci sont mémorisés. En répétant ce processus, les cartographies 34, 35, et 36 sont construites et mémorisées.

Lors d'une étape 52 d'utilisation du véhicule 2, un conducteur commande un démarrage du moteur thermique 6. Par exemple, le véhicule 2 est initialement immobilisé à un feux tricolore sur une chaussée en pente. L'embrayage 16 est ouvert de manière à ce que les arbres 10 et 12 ne soient pas accouplés. Le moteur thermique 6 est à l'arrêt. Par « moteur thermique » à l'arrêt on désigne le fait que la quantité de carburant injecté dans les chambres de combustion du moteur thermique 6 est nulle. Initialement, l'arbre d'entraînement 12 et l'arbre 10 de sortie de vilebrequin sont désaccouplés.

Dans l'exemple, le conducteur redémarre le moteur thermique 6 sous la forme d'un démarrage assisté.

A cet effet, lors d'une étape 54, le conducteur relâche la pression sur la pédale de frein et actionne la pédale d'accélérateur.

Lors d'une étape 56, l'unité 30 commande l'alterno-démarreur de manière à initier la rotation de l'arbre 10 de sortie du vilebrequin. Le régime moteur monte alors progressivement pendant une phase 57.

Lors de cette phase 57 de montée en régime du moteur, l'injection de carburant est commandée, l'unité 30 mesure le régime moteur périodiquement par l'intermédiaire du capteur 28, et on procède aux étapes suivantes.

Lors d'une étape 58, l'unité 30 acquière des mesures de la température du moteur et de la pression atmosphérique issues des capteurs 26, 29.

Lors d'une étape 60, l'unité détermine le seuil de régime S1 correspondant à la température du moteur et la pression atmosphérique mesurées par les capteurs 26, 29, à partir de la cartographie 34.

Lorsque le régime moteur mesuré par le capteur 28 est supérieur au seuil de régime S1, l'unité 30 indique immédiatement le passage du moteur dans l'état « moteur autonome » lors d'une étape 62.

En réponse à l'indication de l'état « moteur autonome », l'alterno-démarreur est mis à l'arrêt et l'unité 30 émet un signal d'autorisation de prélèvement de couple lors d'une étape 64.

En réponse à l'émission du signal d'autorisation de prélèvement de couple, lors d'une étape 66, l'unité 30 commande la boîte de vitesse pilotée 18 de manière à actionner le passage d'un premier rapport.

Par ailleurs, lors de cette étape 66 l'unité 30 commande la fermeture de l'embrayage 16 afin d'accoupler mécaniquement l'arbre 12 avec l'arbre 10. La commande de fermeture est réalisée en fonction d'une consigne prédéfinie de régime moteur pour asservir le régime moteur sur cette consigne prédéfinie. Cet asservissement en régime, conduit au comportement suivant. Si la fermeture de l'embrayage provoque une diminution du régime moteur car le couple prélevé est supérieur au couple que peut fournir le moteur, alors l'embrayage est légèrement réouvert pour diminuer le couple prélevé par les roues motrices et ainsi faire remonter le régime moteur. Si, à l'inverse, le régime moteur dépasse le seuil S1, l'embrayage est commandé pour se fermer un peu plus et ainsi prélever plus de couple. Cet asservissement est mis en œuvre tant que l'embrayage n'est pas complètement fermé, c'est-à-dire tant que le régime de l'arbre de sortie de l'embrayage mécaniquement raccordé aux roues motrices n'est pas égal au régime moteur. Cet asservissement permet donc de faire patiner plus ou moins des disques de l'embrayage pour maintenir le régime du moteur égal à la consigne prédéfinie. Dans ces conditions, l'embrayage est fermé progressivement et le moteur thermique 6 ne cale pas. Lorsque l'embrayage est fermé, les arbres 10 et 12 sont accouplés et le véhicule 2 est apte à se déplacer.

Lors d'une étape 68, l'unité 30 détermine une durée de temporisation T1 à partir de la température du moteur et de la pression atmosphérique mesurées par les capteurs 26, 29 et de la cartographie 34.

Lors d'une étape 70, l'unité 30 temporise pendant la durée T1 déterminée lors de l'étape 68. Une fois cette durée T1 écoulée depuis l'indication de l'état moteur autonome, l'unité 30 commande l'émission d'un signal de couple disponible.

Lors d'une étape 72, l'unité 30 commande le dispositif 22 d'assistance au démarrage en côte en réponse à l'émission du signal de couple disponible. Par exemple, le système de freinage est progressivement relâché jusqu'à libérer le déplacement du véhicule 2. La durée de temporisation T1 garantit au conducteur que lors du démarrage du véhicule 2, ce véhicule 2 se déplacera uniquement vers l'avant. La durée de temporisation T1 prévient ainsi tout mouvement de recul du véhicule 2 du fait de la pente de la chaussée.

Lors d'une étape 74, l'unité 30 détermine une durée de temporisation T2 à partir de la température moteur et de la pression atmosphérique mesurées par les capteurs 26, 29 et de la cartographie 36.

Lors d'une étape 76, l'unité 30 temporise pendant la durée T2 déterminée lors de l'étape 76. Une fois cette durée T2 écoulée depuis l'émission du signal de couple disponible, l'unité 30 commande l'émission d'un signal de couple précis. L'émission de ce signal signifie que les conditions d'injection et de régime moteur sont suffisamment stables pour pouvoir déterminer précisément le couple moteur.

Aussi, en réponse à l'émission du signal de couple précis l'unité 30 détermine le couple moteur, par calcul ou par estimation, à partir de la quantité de carburant injectée et du régime moteur mesuré par le capteur 28 lors d'une étape 78. Cette information est par exemple utilisée en phase de roulage du véhicule 2 afin de déterminer le moment opportun pour commander le passage d'un rapport de la boîte de vitesse pilotée 18.

De nombreux autres modes de réalisation sont possibles.

Par exemple, le moteur thermique 6 n'est pas nécessairement un moteur Diesel. Il peut s'agit d'un moteur à allumage commandé (moteur de type essence).

Le signal d'autorisation de prélèvement de couple peut être omis. Dans ce cas, la boîte de vitesse 18 est directement commandée à partir de l'indication de l'état « moteur autonome ».

Le dispositif d'assistance au démarrage en côte peut être omis du véhicule 2.

La boîte de vitesse pilotée peut inclure l'embrayage 16.

Les cartographies 34, 35, 36 ne sont pas nécessairement des tables. Il peut s'agir de fonction stockées dans la mémoire 32 et prenant pour paramètre d'entrée la température du moteur et/ou la pression atmosphérique. D'autre paramètre que la température du moteur ou la pression atmosphérique peuvent être pris en compte pour la construction des cartographies 34, 35, 36.

Le seuil S1 et les durées T1 et T2 ne sont pas nécessairement fonction de la température du moteur et de la pression atmosphérique. Le seuil S1 et les durées T1 et T2 peuvent, par exemple, être des constantes.

La consigne sur laquelle est asservie la commande de fermeture de l'embrayage 16 peut être un échelon (la consigne est dans ce cas une constante) ou tout autre type de consigne. Par exemple, la consigne peut être un échelon de vitesse (la consigne est alors une courbe linéaire) ou un échelon d'accélération (la consigne est alors une courbe exponentielle).

## Revendications

1. Procédé de commande d'un démarrage d'un véhicule équipé d'un système de mise en veille d'un moteur, ce procédé comportant :
• l'actionnement (52) d'un démarrage du véhicule,
• l'indication (62) d'un état moteur autonome en réponse à la présence simultanée d'une injection de carburant dans des chambres de combustion du moteur thermique et d'un régime du moteur thermique supérieur à un seuil S1 prédéfini, le seuil S1 étant égal à un régime moteur ne pouvant pas être atteint sans combustion dans les chambres de combustion lors d'un démarrage du véhicule, et
• en réponse à l'indication de l'état moteur autonome, la commande (66) de la fermeture d'un embrayage en fonction d'une consigne prédéfinie de régime moteur pour asservir le régime moteur sur cette consigne prédéfinie, l'embrayage permettant d'accoupler mécaniquement des roues motrices du véhicule à un arbre de sortie de vilebrequin du moteur,
**caractérisé en ce que** le procédé comporte également :
• la temporisation (70) de la mise en œuvre d'un dispositif d'assistance au démarrage en côte jusqu'à la fin d'une durée T1 écoulée depuis l'indication (62) de l'état moteur autonome, la durée T1 étant prédéfinie de manière à ce qu'une fois la temporisation écoulée, si un système de freinage est relâché, le couple moteur est suffisamment important pour entraîner le déplacement du véhicule uniquement en marche avant sans mouvement de recul,
• l'émission (70) d'un signal de couple disponible une fois la durée T1 écoulée, et
• la commande (72) du dispositif d'assistance au démarrage en côte en réponse à l'émission (70) de ce signal pour relâcher le système de freinage.

2. Procédé selon la revendication 1, dans lequel tant que l'indication d'un état moteur autonome n'est pas présente, l'embrayage est commandé pour désaccoupler les roues motrices du véhicule à l'arbre de sortie de vilebrequin.

3. Procédé selon l'une quelconque des revendications précédentes, dans lequel le seuil S1 et/ou la durée T1 sont prédéfinis en fonction d'une température du moteur et/ou d'une pression atmosphérique mesurées.

4. Procédé selon l'une quelconque des revendications précédentes, dans lequel le procédé comporte également :
• l'émission (76) d'un signal de couple précis après qu'une deuxième durée T2 se soit écoulée depuis l'émission du signal de couple disponible, et
• le calcul ou l'estimation (78) du couple fourni par le moteur en réponse à l'émission (76) de ce signal de couple précis.

5. Procédé selon la revendication 4, dans lequel la deuxième durée T2 est prédéfinie en fonction d'une température du moteur et/ou d'une pression atmosphérique mesurées.

## Patentansprüche

1. Verfahren zum Steuern des Starts eines Fahrzeugs, das mit einem Motor-Standby-System ausgestattet ist, wobei dieses Verfahren Folgendes umfasst:
• die Betätigung (52) zum Starten des Fahrzeugs,
• die Anzeige (62) eines autonomen Motorzustands als Reaktion auf das gleichzeitige Vorhandensein einer Kraftstoffeinspritzung in die Verbrennungskammern der Wärmekraftmaschine und einer Drehzahl der Wärmekraftmaschine, die größer als ein vordefinierter Schwellenwert S1 ist, wobei der Schwellenwert S1 gleich ist eine Motordrehzahl, die ohne Verbrennung in den Brennräumen beim Starten des Fahrzeugs nicht erreicht werden kann, und
• als Reaktion auf die Anzeige des autonomen Motorzustands die Steuerung (66) des Schließens einer Kupplung gemäß einem vordefinierten Motordrehzahlsollwert, um die Motordrehzahl diesem vordefinierten Sollwert zu regeln, wobei die Kupplung ermöglicht, die Antriebsräder mechanisch zu koppeln des Fahrzeugs zu einer Kurbelwellenausgangswelle des Motors,
**dadurch gekennzeichnet, dass** das Verfahren auch umfasst:
• die Verzögerung (70) der Implementierung einer Berganfahrhilfevorrichtung bis zum Ende einer Zeitdauer T1, die seit der Anzeige (62) des unabhängigen Motorzustands verstrichen ist, wobei die Zeitdauer T1 so vordefiniert ist, dass nach Ablauf der Zeitverzögerung, wenn a Bremssystem gelöst ist, das Motordrehmoment hoch genug ist, um das Fahrzeug nur im Vorwärtsgang ohne Rückwärtsbewegung zu bewegen,
• das Senden (70) eines verfügbaren Drehmomentsignals nach Ablauf der Dauer T1, und
• die Steuerung (72) der Berganfahrhilfevorrichtung als Reaktion auf die Emission (70) dieses Signals, um das Bremssystem zu lösen.

2. Verfahren nach Anspruch 1, wobei, solange die Anzeige eines autonomen Motorzustands nicht vorhanden ist, die Kupplung gesteuert wird, um die Antriebsräder des Fahrzeugs von der Kurbelwellenausgangswelle abzukoppeln.

3. Verfahren nach einem der vorhergehenden Ansprüche, bei dem der Schwellenwert S1 und/oder die Dauer T1 gemäß einer gemessenen Motortemperatur und/oder einem gemessenen Atmosphärendruck vordefiniert werden.

4. Verfahren nach einem der vorhergehenden Ansprüche, wobei das Verfahren auch umfasst:
• Übertragen (76) eines genauen Drehmomentsignals, nachdem eine zweite Zeit T2 verstrichen ist, seit das verfügbare Drehmomentsignal ausgegeben wurde, und
• Berechnen oder Schätzen (78) des vom Motor gelieferten Drehmoments als Reaktion auf die Emission (76) dieses präzisen Drehmomentsignals.

5. Verfahren nach Anspruch 4, bei dem die zweite Dauer T2 in Abhängigkeit von einer gemessenen Motortemperatur und/oder Atmosphärendruck vorgegeben wird.

## Claims

1. Method for controlling the start of a vehicle equipped with an engine standby system, this method comprising :
• the actuation (52) of starting the vehicle,
• the indication (62) of an autonomous engine state in response to the simultaneous presence of an injection of fuel into the combustion chambers of the heat engine and of a speed of the heat engine greater than a predefined threshold S1, the threshold S1 being equal to an engine speed that cannot be reached without combustion in the combustion chambers when the vehicle is started, and
• in response to the indication of the autonomous engine state, the control (66) of the closing of a clutch according to a predefined engine speed setpoint to slave the engine speed to this predefined setpoint, the clutch making it possible to mechanically coupling the drive wheels of the vehicle to a crankshaft output shaft of the engine,
**characterized in that** the method also comprises:
• the delay (70) of the implementation of a hill start assistance device until the end of a duration T1 elapsed since the indication (62) of the independent engine state, the duration T1 being predefined so that once the time delay has elapsed, if a braking system is released, the engine torque is high enough to cause the vehicle to move only in forward gear without any backward movement,
• the transmission (70) of an available torque signal once the duration T1 has elapsed, and
• the control (72) of the hill start assist device in response to the emission (70) of this signal to release the braking system.

2. Method according to claim 1, wherein as long as the indication of an autonomous engine condition is not present, the clutch is controlled to uncouple the driving wheels of the vehicle to the crankshaft output shaft.

3. Method according to any one of the preceding claims, in which the threshold S1 and/or the duration T1 are predefined according to a measured engine temperature and/or atmospheric pressure.

4. Method according to any preceding claims, in which the method also comprises
• transmitting (76) a precise torque signal after a second time T2 has elapsed since the transmission of the available torque signal, and
• calculating or estimating (78) the torque supplied by the motor in response to the emission (76) of this precise torque signal.

5. Method according to claim 4, in which the second duration T2 is predefined as a function of a measured engine temperature and/or atmospheric pressure.
